# EUROPEAN PATENT SPECIFICATION

(11) **EP 3 862 375 B1**
(45) Date of publication and mention of the grant of the patent: **04.09.2024**
(21) Application number: 20382085.7
(22) Date of filing: 10.02.2020
(51) Int. Cl.: C08G 18/20, C08G 18/32, C08G 18/48, C08G 18/66, C08G 18/73, C08G 101/00

(54) **USE OF ALIPHATIC ISOCYANATE AS TOXIC FUME SUPRESSANT IN POLYURETHANE FOAMS**
VERWENDUNG VON ALIPHATISCHEM ISOCYANAT ALS MITTEL ZUR UNTERDRÜCKUNG VON TOXISCHEM RAUCH IN POLYURETHANSCHÄUMEN
UTILISATION D'ISOCYANATE ALIPHATIQUE EN TANT QUE SUPPRESSEUR DE FUMÉES TOXIQUES DANS DES MOUSSES DE POLYURÉTHANE

(43) Date of publication of application: 11.08.2021
(73) Proprietor: Indresmat BV, 6167 RD Geleen (NL)
(72) Inventor: RODRIGUEZ OUTÓN, Pablo, 6167 RD GELEEN (NL)
(74) Representative: Herrero & Asociados, S.L.

(56) References cited:
- EP-A1- 0 010 931
- WO-A1-2015/090953
- DE-C1- 3 609 696

## Description

### FIELD OF THE INVENTION

The present invention relates to the field of polyurethane foams and the way to reduce the smoke and the toxic compounds created when the foam burns.

### BACKGROUND OF THE INVENTION

Polyurethane foams are prepared from the reaction between a di-isocyanate or polyisocyanate and a di-alcohol or polyol component. Polyurethanes foams are playing a relevant role in many areas because of their wide range of physical and properties. Polyurethane foams can be classified into flexible foams mainly used in furniture, mattresses, automotive seats and rigid foams used mainly as insulation and as structural materials.

However, polyurethanes foams are flammable when exposed to fire, and even more relevant is when the polyurethane foam burns, thus releasing a large amount of toxic smoke.

There are some documents describing polyurethane foams that include in the composition a compound defined as "smoke suppressant". For example, the European patent application EP0354632A describes a foam polymer composition having resistance to flame exposure that comprises an inorganic filler material such as alumina trihydrate or sodium silicate wherein the foam shows low levels of smoke when the foam is burned. However, the inorganic fillers may not be soluble in polyol components, which results in a poor dispersion within the polymer matrix, thus lowering the technical properties.

Another patent document that describes inorganic filler like a toxic smoke reducer is the patent EP0010931 wherein it is described the use of cobalt, copper, nickel or manganese salt of an aliphatic or alicyclic monocarboxylic acid. The salt is included in the reaction mixture normally used in the formation of polyurethane composition.

The patent application US5102919 describes how the aliphatic dibasic ester added like an additive in a polyurethane-polyisocyanurate foam formulation, reduce the smoke generation. The foam formulation comprises an organic aromatic isocyanate, a polyol, a non- reactive flame-retardant additive, a catalyst and the smoke reducing mixture of aliphatic dibasic esters.

Thus, from what is known in the prior art, it is derived that the development of a polyurethane foam which improves the passive fire safety behaviour when burning, it is still of great interest.

### SUMMARY OF THE INVENTION

Polyurethane foams are formed from the reaction between isocyanate and hydroxyl group compounds which result in urethane groups. The process includes two reactions. The first one is the reaction between isocyanate groups and hydroxyl groups, which forms backbone urethane groups. The second one is the reaction between isocyanate group and water (known as the blowing agent) which forms carbamic acid, decomposing into amine and carbon dioxide gas in the form of bubbles.

Polyurethane foams exhibit excellent sealing, cushioning and vibration control features due to low compression property. They also are excellent insulating materials, but they offer poor safety during fires. The most critical technical limitation of conventional polyurethane foams is their extremely high toxic smoke when burning.

The present invention has as main object to provide polyurethane foams that show highly improved passive protection in case of fire. The main advantage of the foam of the present invention is its reduced flammability and low emission of non-toxic fumes when burning.

The problem to be solved is to avoid extremely toxic fumes produced by the polyurethane foams currently used. The foam of the invention avoids the fast burning and the high fire propagation speed of conventional polyurethanes foams when they are exposed to flames, releasing big amounts of smokes that decrease the oxygen content in the fire area causing asphyxia during a fire.

The foam of the invention drastically reduces the toxic components present in fumes, decreases the amount of smoke released, and decreases the flammability and fire propagation speed.

Therefore, as first approach, the invention refers to the use of aliphatic isocyanate as a toxic fume suppressant in polyurethane foam, wherein the aliphatic isocyanate component is included in the polyurethane foam by reacting with at least a polyol compound.

The term "isocyanate component" means at least one isocyanate compound.

"Toxic fume suppressant" refers to the aliphatic isocyanate included in the polyurethane foam that results in toxic fume reduction when the foam is exposed to fire as compared to conventional PUR foams without aliphatic isocyanate.

The term "aliphatic isocyanate" refers to non-aromatic isocyanates, i.e. isocyanate in which the isocyanate groups are attached to saturated carbon atoms. Preferably, the isocyanate compound employed contains two isocyanate groups, however, isocyanate compounds containing more than two isocyanate groups are suitable for use in preparing the polyurethane foam. The aliphatic group is a hydrocarbon moiety that may be straight-chain (i.e., unbranched), branched, or cyclic (including fused, bridging, and spiro-fused polycyclic) and may be completely saturated or may contain one or more units of unsaturation, but which is not aromatic. Unless otherwise specified, aliphatic groups contain 1-40 carbon atoms. In certain embodiments, aliphatic groups contain 1-20 carbon atoms. In certain embodiments, aliphatic groups contain 3-20 carbon atoms. In certain embodiments, aliphatic groups contain 1-12 carbon atoms. In certain embodiments, aliphatic groups contain 1-8 carbon atoms. In certain embodiments, aliphatic groups contain 1-6 carbon atoms. In some embodiments, aliphatic groups contain 1-5 carbon atoms, in some embodiments, aliphatic groups contain 1-4 carbon atoms, in some embodiments aliphatic groups contain 1-3 carbon atoms, and in some embodiments aliphatic groups contain 1 or 2 carbon atoms. Examples of aliphatic isocyanate are: hexamethylene diisocyanate (HDI), pentamethylene diisocyanate (PDI), isophorone diisocyanate (IPDI), 4,4'-diisocyanatodicyclohexylmethane (H12MDI) and 2,4,4-trimethylhexamethylene diisocyanate (TMDI). The aliphatic isocyanate refers to monomer, dimer, oligomer and polymers containing two or more reactive isocyanate groups.

The term polyol refers to a compound having at least two alcohol or hydroxyl (-OH). The polyol can comprise at least one amine group. Examples of polyol are: functional polyether polyols, polyester polyols, polybutadiene polyols, natural oil polyols, aliphatic polyols. The aliphatic group is a hydrocarbon moiety that may be straight-chain (i.e., unbranched), branched, or cyclic (including fused, bridging, and spiro-fused polycyclic) and may be completely saturated or may contain one or more units of unsaturation, but which is not aromatic.

The foam can be used as structural material, thermal and acoustic insulating material as well as cushioning material in various markets such as construction, household items, automotive and aerospace, thus providing increased passive fire safety.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:

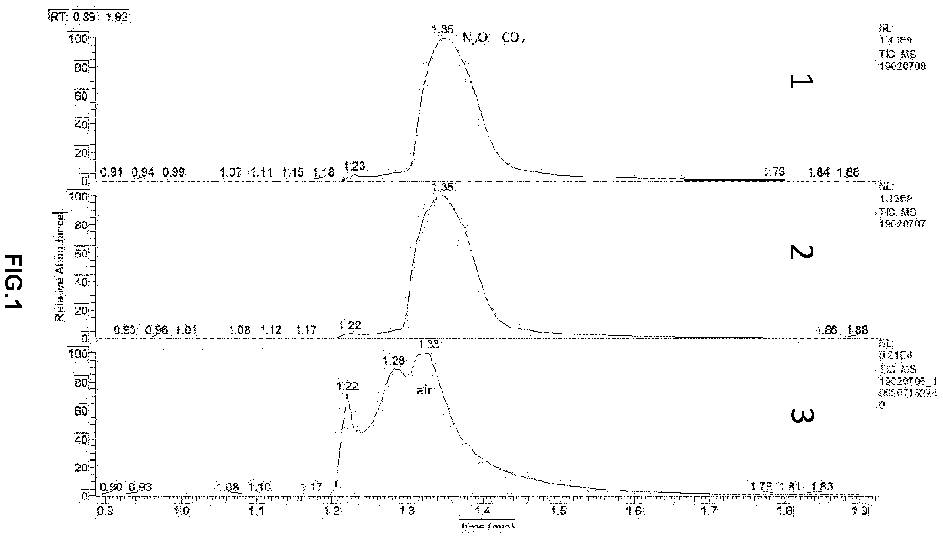

Figure 1 shows a comparative chromatographic profile corresponding to the analysed samples.
Figure 2 shows a zoomed chromatographic profile between 2-6 min.
Figure 3 shows a mass spectrum of peak at RT 1.39 min (N₂O or CO₂) and its comparison with NIST05 library.
Figure 4 shows a mass spectrum of peak at RT 2.78 min (cyanogen) and its comparison with NIST05 library.
Figure 5 shows a mass spectrum of peak at RT 3.47 min (propene) and its comparison with NIST05 library.
Figure 6 shows a mass spectrum of peak at RT 4.20 min (methyl chloride) and its comparison with NIST05 library.
Figure 7 shows a mass spectrum of peak at RT 4.35 min (Methylacetylene) and its comparison with NIST05 library
Figure 8 shows a mass spectrum of peak at RT 4.73 min (Propadiene) and its comparison with NIST05 library.
Figure 9 shows a flame test of the foam from the sample 2 used the Example 1 (left) versus the foam from the sample 3 used in the Example 1 (right).

### DETAILED DESCRIPTION OF THE INVENTION

As mentioned above, the approach of the present invention relates to the use of aliphatic isocyanate as a fume toxic suppressant in polyurethane foam, wherein the aliphatic isocyanate component is included in polyurethane foam by reacting with at least one polyol compound.

The polyurethane foam has an absence of halogenated flame retardants and inorganic fillers and phosphate-based flame retardants.

The present invention also relates to the use of aliphatic isocyanate as a fume toxic suppressant and a flame retardant in polyurethane foam, wherein the aliphatic isocyanate component is included in the polyurethane foam by reacting with at least one polyol compound.

Preferably the isocyanate component is selected from one to five isocyanate compounds and when the compounds are two to five these compounds are the same or different.

In a particular embodiment the aliphatic polyisocyanate is selected from: hexamethylene diisocyanate (HDI), pentamethylene diisocyanate (PDI), isophorone diisocyanate (IPDI), 4,4'-diisocyanatodicyclohexylmethane (H12MDI) and 2,4,4-trimethylhexamethylene diisocyanate (TMDI).

### Example 1

In the present Example three samples were analysed.
Sample 1 (aliphatic sample): fumes recollected after burning polyurethane foam obtained by reacting aliphatic polyisocyanate and polyol compounds. The aliphatic polyisocyanate used was pentamethylene diisocyanate (PDI). The polyol compounds were trifunctional polyether polyol based on glycerol (25%), difunctional polyether polyol based on 1,3-propanediol (5%), 1,4-butanediol (5%) and triethylenediamine (1 %) as catalys. Also 0,2% of blowing agent (water) was added. The mixing ratio polyol/iso was 65/35
Sample 2 (aromatic sample): fumes recollected after burning polyurethane foam obtained by reacting aromatic isocyanate and polyol compounds. The aromatic polyisocyanate used was diphenylmethane diisocyanate. trifunctional polyether polyol based on glycerol (10%), difunctional polyether polyol based on 1,3-propanediol (30%), 1,4-butanediol (10%) and triethylenediamine (0.5%) as catalyst. Also 0,2% of blowing agent (water) was added. The mixing ratio polyol/iso was 50/50.
Sample 3: (control): lab air room from where the combustion tests were performed.
Tests performed: Screening by GC/MS

### Analytical methodology

Sample preparation: direct introduction
Analytical determination: Gas chromatography-mass spectrometry (GC/MS)

### Equipment used:

Column: SupelQ-Plot (30m x 0.32mm)
Injector temperature: 200°C
Mode: Split / Split ratio: 20:1 / Injection volume: 0,6 ml
Temperature programme: 30°C(6min)@10°C/min until 120°C(1min)
Interface temperature: 250°C / Ionization source temperature: 230°C
Ionization mode: electron impact, SCAN mode (29-250 amu)
Instrumentation: Trace Gas chromatograph coupled to a DSQII mass spectrometer (ThermoFisher Scientific)
Carrier gas: Helium flow 1 ml/min

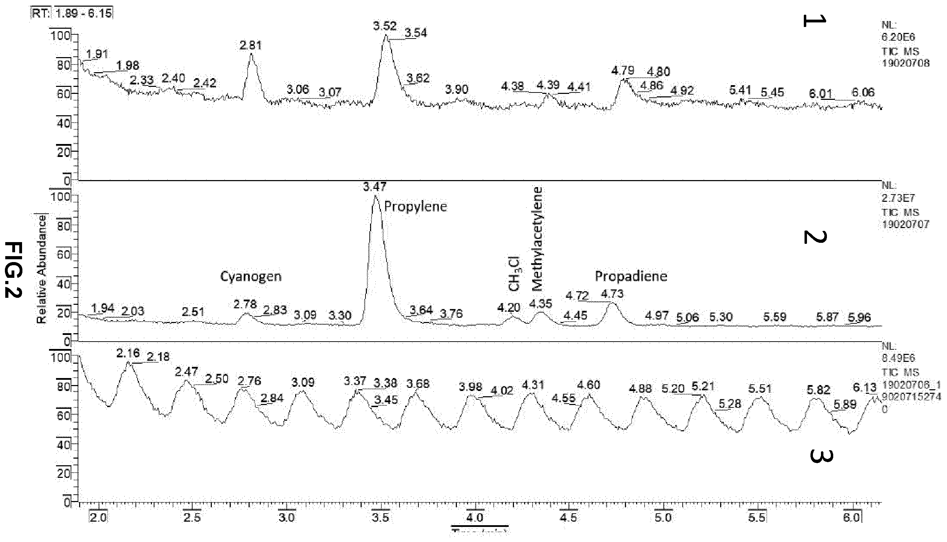

Figures 2-3 illustrates that the sample 2 (aromatic sample) shows the presence of peaks corresponding to propylene and propadiene, which are olefins (therefore extremely flammable and toxic per se). However, the sample 1 (aliphatic sample) does not show these peaks, clear evidence that the toxicity of smoke is lower as it does not contain such extremely flammable and toxic compounds.

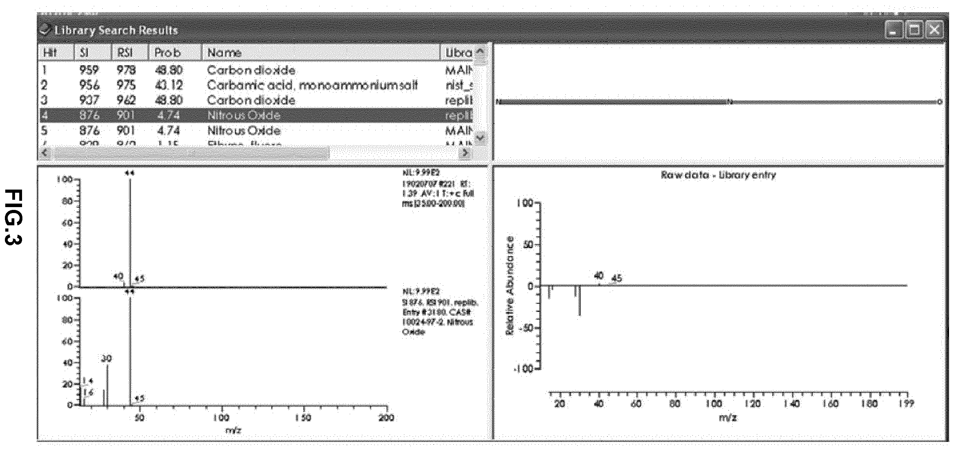

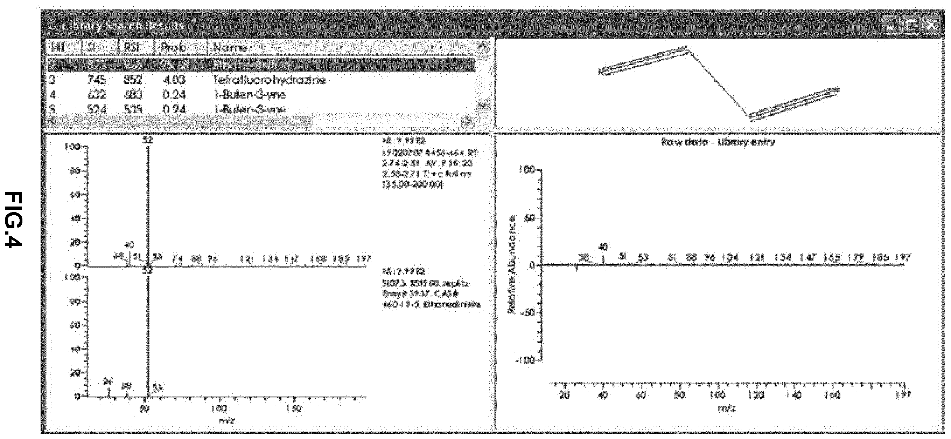

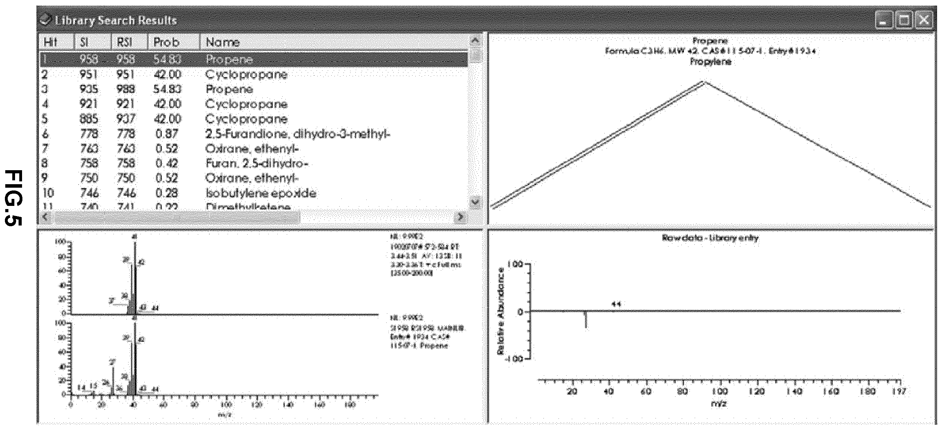

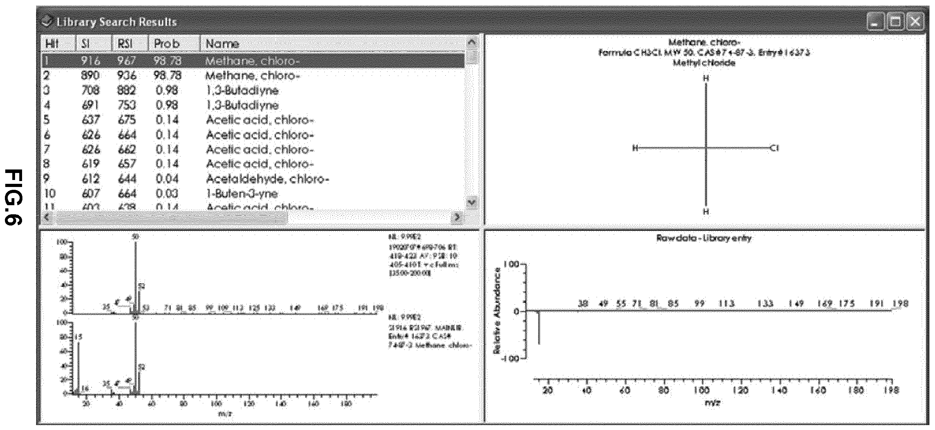

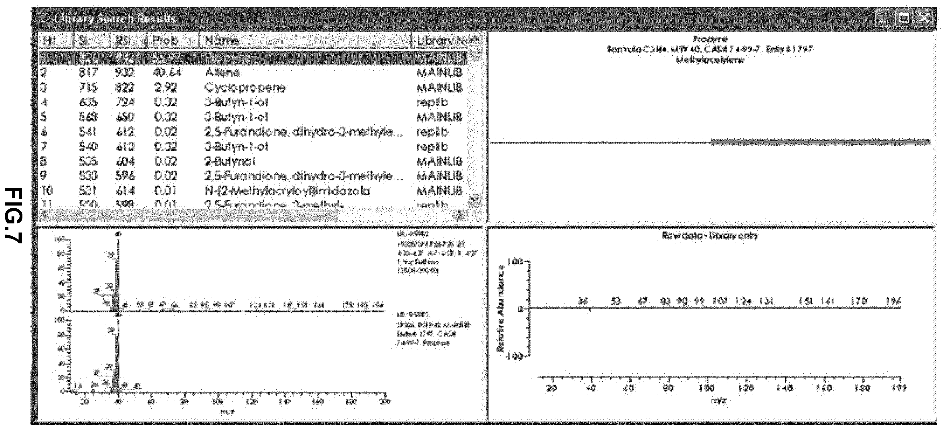

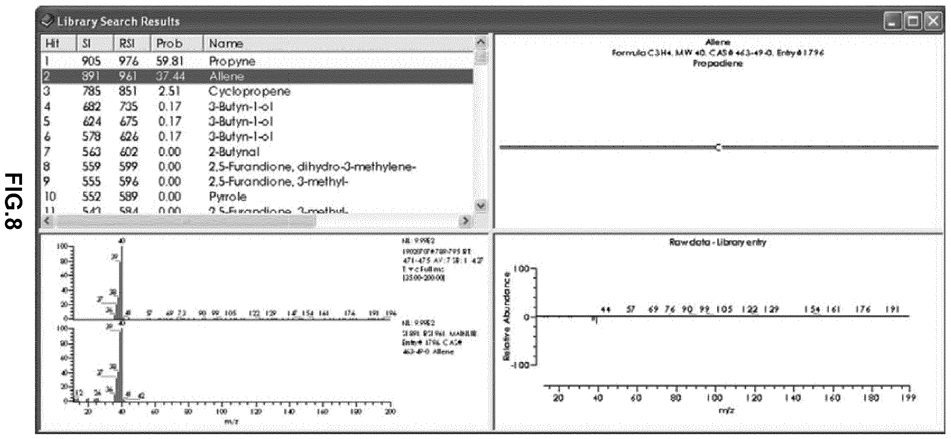

The results showed by the gas chromatograph were confirmed by the mass spectrum. The figures 3-8 show the mas spectrum that confirm:
the peak at RT 1.39 min is N₂O;
the peak at RT 2.78 min is cyanogen;
the peak at RT 3.47 min is propene;
the peak at RT 4.20 min is methyl chloride;
the peak at RT 4.35 min is Methylacetylene;
the peak at RT 4.73 min is propadiene.

Due to this it is confirmed that including aliphatic polyisocyanate in polyurethane foam implies that the foam is less flammable and with less spread to fire and also with much less toxicity in the absence of olefins (evidenced in GC-MS analysis).

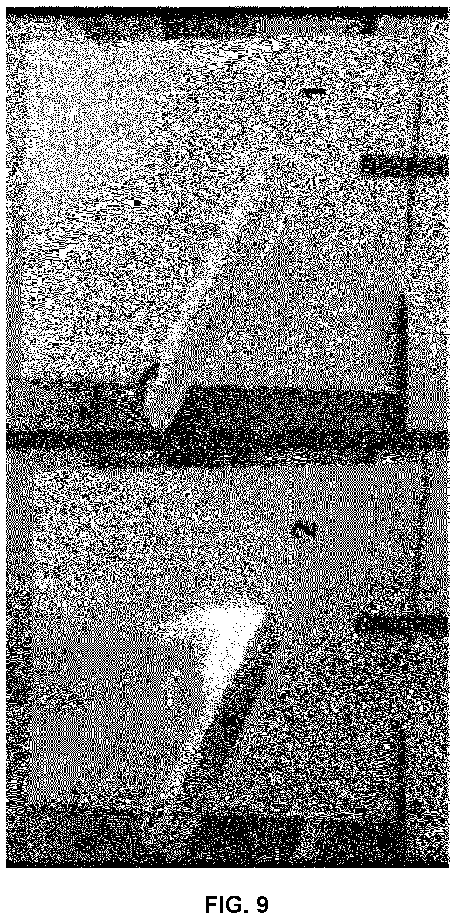

Figure 9 shows the foam of sample 2 (left) and the foam of sample 1 (right) burning. The aromatic foam shows high amount of dark smokes, that means toxic smoke and fast ignition. The foam of sample 1 (right) shows very low emission of white (non toxic) smoke and a retarded ignition.

## Claims

1. Use of aliphatic isocyanate, as a toxic fume suppressant in polyurethane foam, wherein the aliphatic isocyanate component is included in the polyurethane foam by reacting with at least one polyol compound.

2. The use of aliphatic isocyanate, as a fume toxic suppressant and a flame retardant in polyurethane foam, wherein aliphatic polyisocyanate compound is included in the polyurethane foam by reacting with at least one polyol compound.

3. The use according to any of the claims 1 to 2, wherein the polyurethane foam has an absence of halogenated flame retardants and inorganic fillers and phosphate based flame retardants.

4. The use according to any of the claims 1 to 3 wherein the aliphatic isocyanate component is selected from one to five compounds and when the compounds are two to five these compounds are the same or different.

5. The use according to any of the claims of claims 1 to 4, wherein the aliphatic polyisocyanate is selected from: hexamethylene diisocyanate (HDI), pentamethylene diisocyanate (PDI), isophorone diisocyanate (IPDI), 4,4'-diisocyanatodicyclohexylmethane (H12MDI) and 2,4,4-trimethylhexamethylene diisocyanate (TMDI).

## Patentansprüche

1. Verwendung von aliphatischem Isocyanat als Mittel zur Unterdrückung von giftigen Dämpfen in Polyurethanschaum, wobei der aliphatische Isocyanat-Bestandteil in dem Polyurethanschaum durch Reaktion mit mindestens einer Polyolverbindung beinhaltet ist.

2. Verwendung von aliphatischem Isocyanat als Mittel zur Unterdrückung von giftigen Dämpfen und als Flammschutzmittel in Polyurethanschaum, wobei eine aliphatische Polyisocyanatverbindung in dem Polyurethanschaum durch Reaktion mit mindestens einer Polyolverbindung beinhaltet ist.

3. Verwendung nach einem der Ansprüche 1 und 2, wobei der Polyurethanschaum keine halogenierten Flammschutzmittel, anorganischen Füllstoffe und phosphat-basierten Flammschutzmittel beinhaltet.

4. Verwendung nach einem der Ansprüche 1 bis 3, wobei der aliphatische Isocyanat-Bestandteil aus einer bis fünf Verbindungen ausgewählt wird und, wenn es sich um zwei bis fünf Verbindungen handelt, diese Verbindungen gleich oder unterschiedlich sind.

5. Verwendung nach einem der Ansprüche 1 bis 4, wobei das aliphatische Polyisocyanat ausgewählt wird aus: Hexamethylendiisocyanat (HDI), Pentamethylendiisocyanat (PDI), Isophorondiisocyanat (IPDI), 4,4'-Diisocyanatodicyclohexylmethan (H12MDI) and 2,4,4-Trimethylhexamethylendiisocyanat (TMDI).

## Revendications

1. Utilisation d'isocyanate aliphatique, comme suppresseur de fumées toxiques dans une mousse de polyuréthane, dans laquelle le composant isocyanate aliphatique est incorporé dans la mousse de polyuréthane par réaction avec au moins un composé polyol.

2. Utilisation d'isocyanate aliphatique, comme suppresseur de fumées toxiques et retardateur de flamme dans une mousse de polyuréthane, dans laquelle un composé polyisocyanate aliphatique est incorporé dans la mousse de polyuréthane par réaction avec au moins un composé polyol.

3. Utilisation selon l'une quelconque des revendications 1 à 2, dans laquelle la mousse de polyuréthane présente une absence de retardateurs de flamme et charges inorganiques halogénés et de retardateurs de flamme à base de phosphate.

4. Utilisation selon l'une quelconque des revendications 1 à 3, dans laquelle le composant isocyanate aliphatique est choisi parmi un à cinq composés et lorsque les composés sont au nombre de deux à cinq, ces composés sont identiques ou différents.

5. Utilisation selon l'une quelconque des revendications 1 à 4, dans laquelle le polyisocyanate aliphatique est choisi parmi : diisocyanate d'hexaméthylène (HDI), diisocyanate de pentaméthylène (PDI), diisocyanate d'isophorone (IPDI), 4,4'-diisocyanatodicyclohexylméthane (H12MDI) et diisocyanate de 2,4,4-triméthylhexaméthylène (TMDI).
